(19) Europäisches Patentamt / European Patent Office / Office européen des brevets

(11) **EP 2 358 494 B1**

(12) **EUROPÄISCHE PATENTSCHRIFT**

(45) Veröffentlichungstag und Bekanntmachung des Hinweises auf die Patenterteilung:
**27.03.2013  Patentblatt 2013/13**

(21) Anmeldenummer: 09760758.4

(22) Anmeldetag: **24.11.2009**

(51) Int Cl.:
*B23F 5/20* (2006.01)       *B23F 19/00* (2006.01)
*B23F 21/16* (2006.01)       *B23F 5/04* (2006.01)

(86) Internationale Anmeldenummer:
**PCT/EP2009/008363**

(87) Internationale Veröffentlichungsnummer:
**WO 2010/060596 (03.06.2010 Gazette 2010/22)**

(54) **Verfahren zur Bearbeitung der Flanken im wesentlichen zylindrischer, aber breitenballig modifizierter Verzahnungen im Diagonal-Wälzverfahren**

Method for processing the flanks of mainly cylinder but crowned cogged pieces in diagonal welding method

Procédé de traitement des flancs de dentelures essentiellement cylindriques, mais modifiées et bombées en largeur dans le procédé de roulement en diagonale

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.11.2008  EP 08020426**

(43) Veröffentlichungstag der Anmeldung:
**24.08.2011  Patentblatt 2011/34**

(73) Patentinhaber: **Gleason-Pfauter Maschinenfabrik GmbH**
**71636 Ludwigsburg (DE)**

(72) Erfinder:
• **FAULSTICH, Ingo**
  **71634 Ludwigsburg (DE)**
• **HEIDELMANN, Wilfried**
  **71634 Ludwigsburg (DE)**

(74) Vertreter: **Leinweber & Zimmermann**
**Rosental 7, II. Aufgang**
**80331 München (DE)**

(56) Entgegenhaltungen:
EP-A1- 1 995 010       EP-A2- 1 036 624
DE-A1- 3 704 607

**EP 2 358 494 B1**

**EP 2 358 494 B1**

**Beschreibung**

Die Erfindung betrifft ein Verfahren zur Bearbeitung der Flanken im Wesentlichen zylindrischer, aber breitenballig modifizierter Verzahnungen im Diagonal-Wälzverfahren nach dem Oberbegriff des Anspruches 1.

Bei der Erzeugung schrägverzahnter breitenballiger Zylinderräder im kontinuierlichen Wälzverfahren entstehen verwundene Flanken. Ein Maß für die Verwindung ist die Schränkung. Es besteht die Forderung, die Schränkung zu vermeiden oder eine von der "natürlichen Schränkung" abweichende Schränkung zu erzeugen.

Zur Lösung der Aufgabe, die Schränkung zu vermeiden, ist bekannt (DE 37 04 607), die Verzahnung im Diagonal-Wälzverfahren zu bearbeiten und dabei ein schneckenförmiges Werkzeug einzusetzen, dessen Eingriffswinkel der Rechts- bzw. Linksflanken von einem Maximalwert an einem Ende der Schnecke ausgehend zum anderen Ende hin kontinuierlich abnimmt, wobei der maximale Eingriffswinkel der Rechtsflanken an einem Ende der Schnecke mit dem minimalen Eingriffswinkel der Linksflanken zusammenfällt und umgekehrt. Dieses Werkzeug ist sehr aufwändig in der Herstellung und wenig flexibel im Einsatz.

In EP 1 036 624 A2 wird vorgeschlagen, eine steigungshöhenmodifizierte Schnecke als Werkzeug einzusetzen. Bei diesem Werkzeug ändert sich die Steigungshöhe der Flanken von einem Ende der Schnecke ausgehend zum anderen Ende hin proportional zum Abstand vom Schneckenende, wobei die maximale Steigungshöhe der einen Flanke an einem Ende der Schnecke mit der minimalen Steigungshöhe der anderen Flanke an diesem Schneckenende zusammenfällt und umgekehrt. Ein derartiges Werkzeug ist breitenballig oder breitenhohl. Das Werkzeug soll im Diagonalverfahren arbeiten.

Beim Einsatz eines breitenballigen bzw. breitenhohlen Werkzeuges im Diagonalverfahren entsteht am Werkstück eine Schränkung. Diese Schränkung lässt sich, wie die folgenden Ausführungen zeigen, in zwei Anteile zerlegen. Der erste Anteil ist in der EP 1 036 624 A2 beschrieben. Bei dem zweiten Anteil handelt es sich um einen bisher nicht erkannten Anteil. Nur über diesen Anteil wird es möglich, für ein Werkstück mit vorgegebener Breitenballigkeit die Schränkung zu vermeiden, oder auf einen gewünschten Wert zu bringen.

Dokument EP 1995010 beschreibt ein Verfahren zur Bearbeitung der Flanker im wesentlichen zylindricher, aber breitenballig modifizierter Verzahnunger gemäβ dem Oberbegriff von Anspruch 1.

Der Erfindung liegt die Aufgabe zugrunde, das gattungsgemäße Verfahren so auszubilden, dass breitenballig modifizierte Flanken im Ein- bzw. Zweiflankenprozess mit praktisch beliebiger Schränkung erzeugbar sind, dass geometrisch einfache Werkzeuge eingesetzt werden können, dass die für das Bearbeiten benötigte Werkzeuglänge ir. weiten Grenzen frei wählbar und das Verfahren auch mit kurzen Werkzeugen durchführbar ist.

Diese Aufgabe wird beim gattungsgemäßen Verfahren nach Anspruch 1 mit den kennzeichnenden Merkmalen nach Anspruch 1 gelöst. Bevorzugte Verfahrensgestaltungen sind in den abhängigen Ansprüchen angegeben.

Durch die Abstimmung der Balligkeit des Werkzeuges mit dem Diagonalverhältnis wird mit einem einfachen Werkzeug eine Schränkung erzeugt, die der natürlichen Schränkung überlagert wird und so die für das Werkstück geforderte Schränkung ergibt. Außerdem wird dem Anteil der Balligkeit des Werkstückes, der aus der Balligkeit des Werkzeuges beim Arbeiten im Diagonalverfahren hervorgeht, ein weiterer Anteil der Balligkeit überlagert, sodass resultierend die geforderte Balligkeit am Werkstück vorliegt, wobei dieser weitere Anteil der Balligkeit über eine Änderung des Abstandes zwischen Werkzeug und Werkstück während der Bearbeitung erzeugt wird. Es ist möglich, die geforderten Werte für Breitenballigkeit und Schränkung des Werkstückes mit Werkzeugen zu verwirklichen, deren Länge in weiten Grenzen frei wählbar ist. Die Werkzeuge müssen dann mit ihrer Balligkeit an diese Länge angepasst werden. Durch die vorgeschlagenen Maßnahmen wird die gestellte Aufgabe in einfacher Weise mit einfachen Werkzeugen gelöst.

Weitere Merkmale der Erfindung ergeben sich aus den weiteren Ansprüchen, der Beschreibung und den Zeichnungen. Die Erfindung wird anhand der folgenden Zeichnungen näher erläutert. Es zeigen:

Fig. 1    ein Werkzeug 0, ein Werkstück 2 sowie Achsen einer Bearbeitungsmaschine zur Beschreibung von Positionen, Strecken und Bewegungen,

Fig. 2    eine Darstellung zur Bestimmung der Flankentopographie der Links- und der Rechtsflanken einer rechtsschrägen Verzahnung mit Breitenballigkeit, erzeugt im Diagonal-Wälzverfahren mit zylindrischem Werkzeug,

Fig. 3    eine Darstellung zur Bestimmung der Flankentopographie einer Rechtsflanke einer rechtsschrägen Verzahnung mit Breitenballigkeit, erzeugt im Diagonal-Wälzverfahren mit hohlballig modifiziertem Werkzeug,

Fig. 4    ein Verfahren zur Erzeugung einer Balligkeit oder Hohlballigkeit an einem schneckenförmigen Werkzeug.

Anhand der folgenden Betrachtungen wird erläutert, wie beim Bearbeiten schrägverzahnter, breitenballiger Zylinderräder im kontinuierlichen Wälzverfahren die Schränkung der Flanken entsteht, wie man sie vermeiden oder auf ein gewünschtes Maß bringen kann, und wie die dazu erforderlichen Werkzeuge ausgelegt werden.

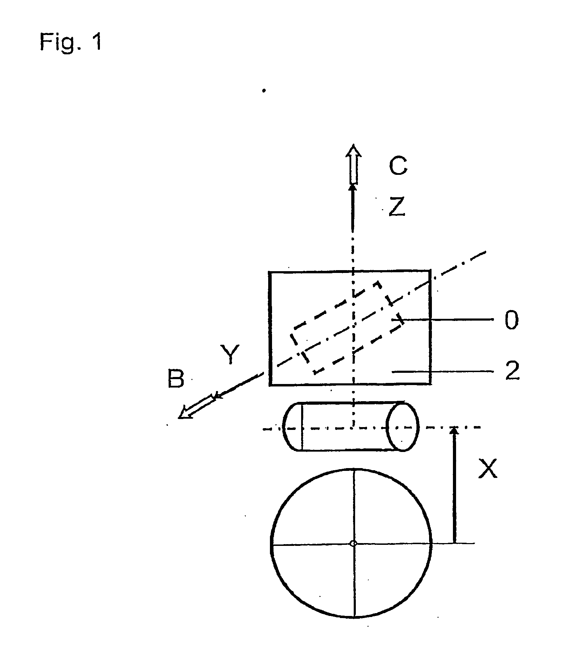

Die Betrachtungen gehen aus von einer Maschine mit vertikaler Werkstückdrehachse, wie sie vom Wälzfräsen her bekannt ist. Die Achsen zur Beschreibung von Positionen, Wegen und Bewegungen von Werkzeug 0 und Werkstück 2 (Fig. 1) sind:

| X | Achsabstand (radial) |
|---|---|
| Y | Werkzeugachsrichtung (tangential) |
| Z | Werkstückachsrichtung (axial) |
| A | Schwenkung Werkzeugachse |
| B | Drehung Werkzeug |
| C | Drehung Werkstück |

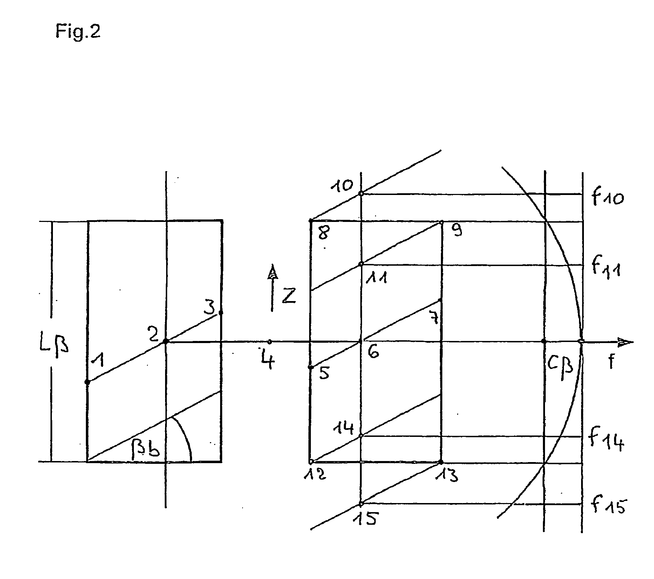

Die Flanken der hier betrachteten Zylinderräder werden, sofern keine Modifikationen vorhanden sind, von Evolventenschraubenflächen gebildet; diese sind zur Erläuterung quantitativer Zusammenhänge schlecht geeignet. Deshalb werden die Flanken im Folgenden in einer Tangentialebene an den Grundzylinder dargestellt (Fig. 2). Die geometrisch komplizierten Evolventenschraubenflächen gehen dabei über in Rechtecke mit den Kantenlängen $L_\alpha$ und $L_\beta$. Derartige Rechtecke werden im Folgenden als "Messfelder" bezeichnet.

Dreht man ein Rad um seine Achse, so beschreiben die Durchstoßpunkte von Schraubenlinien im Messfeld vertikal verlaufende Geraden. Stirnschnitte durch das Zahnrad beschreiben horizontal verlaufende Geraden. Die Berührpunkte zwischen einem schneckenförmigen Werkzeug und einer einwandfrei bearbeiteten Flanke liegen ebenfalls auf Geraden, den Erzeugungsberührspuren. Diese sind gegenüber dem Stirnschnitt unter dem Grundschrägungswinkel $\beta_b$ geneigt, solange der Axialvorschub klein ist. Diese Voraussetzung ist bei den hier betrachteten Anwendungsfällen gegeben. Notfalls lässt sich der Einfluss des Vorschubes auf den Neigungswinkel über bekannte Zusammenhänge berechnen und für die weiteren Betrachtungen der korrekte Winkel verwenden.

Die in Fig. 2 schräg über die Flanke verlaufenden Geraden 1,2,3 und 5,6,7 sind Erzeugungsberührspuren. Hält man die Erzeugungsberührspuren der Linksflanken L und der Rechtsflanken R über die durch den Punkt 4 verlaufende Linie starr miteinander verbunden und bewegt den Punkt 4 in Richtung Z, so beschreiben die Geraden die Geometrie der entstehenden Flanken. Hebt man nun während der Bewegung des Punktes 4 in Richtung Z den Punkt und damit die Erzeugungsberührspuren entsprechend dem Verlauf der im rechten Teil der Darstellung angegebenen Balligkeitskurve, so beschreiben die Erzeugungsberührspuren jeweils eine geschlossene Fläche über dem Messfeld der Links- bzw. der Rechtsflanke. Diese Flächen hüllen die erzeugten Flanken ein; sie stellen die Topographie der mit zylindrischem Werkzeug erzeugten breitenballigen Flanken dar.

Beim Bearbeiten eines Werkstückes im kontinuierlichen Wälzverfahren entstehen Werkstückflanken, bei denen Punkte der Linksflanken und der Rechtsflanken auf dem Teilzylinder praktisch dieselbe Z-Position aufweisen; ein Spurversatz tritt deshalb praktisch nicht auf.

Schneidet man eine der einhüllenden Flächen, z.B. die der Rechtsflanke, mit einer Stirnschnittebene, so stellt die Schnittlinie den Verlauf der Profilabweichung dieser Flanke in dem entsprechenden Stirnschnitt dar. Schneidet man die einhüllende Fläche mit einem Kreiszylinder konzentrisch zur Radführungsachse, oder, bezogen auf Fig. 2, mit einer Ebene senkrecht zum Messfeld und senkrecht zum Stirnschnitt, so stellt die Schnittlinie den Verlauf der Flankenlinienabweichung auf dem entsprechenden Zylinder dar. Die interessierenden Profil- bzw. Flankenlinienabweichungen lassen sich mit Hilfe eines Rechners nach dem hier erläuterten Verfahren zuverlässig bestimmen und aus den Abweichungsverläufen die jeweiligen Winkelabweichungen berechnen. Die Profil- oder die Flankenlinienabweichungen, jeweils in zwei Ebenen einer Flanke gemessen, werden benötigt, um die Schränkung einer Flanke zu bestimmen. Über die Profilwinkelabweichungen lässt sich die Schränkung $S_\alpha$ wie folgt berechnen:

$$S_\alpha = f_{H\alpha I} - f_{H\alpha II}$$

$f_{H\alpha I}$ bzw. $f_{h\alpha II}$ sind die Profilwinkelabweichungen in den Ebenen I (Vorderseite) bzw. II (Rückseite) des Rades.

In den meisten Fällen ist der geforderte Verlauf der Breitenballigkeit über eine quadratische Parabel beschreibbar. In diesen Fällen lässt sich die Schränkung einer Flanke berechnen aus der Höhe, die die einhüllende Fläche über bzw. unter den vier Eckpunkten des Messfeldes besitzt. Die vier Eckpunkte des Messfeldes der Rechtsflanke in Fig. 2 sind 8, 9, 13, 12. Alle Punkte einer Erzeugungsberührspur in Fig. 2 besitzen in guter Näherung dieselbe Höhe über bzw. unter dem Messfeld, sofern das Werkzeug zylindrisch ist. Bezeichnet man diese Höhe jeweils mit f, so gilt:

$$f_{H\alpha I} = f_{11} - f_{10}$$

und

$$f_{H\alpha II} = f_{15} - f_{14}$$

Berechnet man die einzelnen Höhen über die den Verlauf der Breitenballigkeit des Werkstückes beschreibende quadratische Parabel, so lässt sich für die Schränkung der Flanke eine einfache Gleichung angeben. Berücksichtigt man, dass im vorliegenden Fall die Balligkeit entsprechend dem Stand der Technik erzeugt wurde, also z.B. über eine Änderung des Achsabstandes X zwischen Werkzeug 0 und Werkstück 2 während der Verschiebung des Axialschlittens in Richtung Z nach Fig.1, d.h. über X (Z), so lässt sich die hier berechnete Schränkung als natürliche Schränkung $S_{nat1}$ bezeichnen. Es gilt:

$$S_{nat1} = k_1 * c_{\beta x}$$

$k_1$ ist eine Konstante, die sich aus der vorstehend erläuterten Berechnung ergibt,
$c_{\beta x}$ ist die Breitenballigkeit des Werkstückes, erzeugt über X (Z).

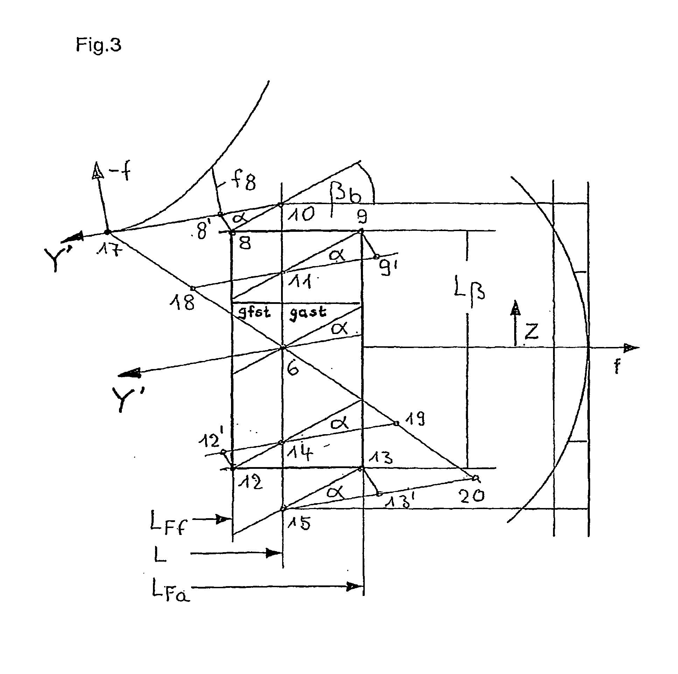

Setzt man zur Erzeugung einer Werkstückballigkeit ein schneckenförmiges Werkzeug ein, das in Richtung seiner Drehachse ballig modifiziert ist, so entsteht beim Arbeiten im Diagonalverfahren ebenfalls eine Schränkung. Die Berechnung dieser Schränkung ist nicht so einfach wie die Berechnung der natürlichen Schränkung. Die folgenden Betrachtungen betreffen den Einsatz eines hohlballigen Werkzeuges beim Bearbeiten der Rechtsflanke einer rechtsschrägen Verzahnung im Diagonalverfahren. Der Abstand zwischen Werkzeug und Werkstück sei konstant. Bei der Transformation der Erzeugungsberührspuren auf die Zeichenebene erhält man wieder gerade Linien, die unter $\beta_b$ zum Stirnschnitt geneigt sind. Die Erzeugungsberührspuren verlaufen jedoch senkrecht zum Messfeld nicht geradlinig; sie lassen sich vielmehr als Teil der in das Werkzeug eingebrachten Balligkeit beschreiben. In Fig. 3 ist die aus der Balligkeit des Werkzeuges resultierende Balligkeit des Werkstückes $c_{\beta y}$ in die Zeichenebene geklappt.

Da das Bearbeiten im Diagonalverfahren erfolgt, besitzen alle Erzeugungsberührspuren in unterschiedlichen Z-Positionen senkrecht zum Messfeld unterschiedlichen Verlauf. Dieser Verlauf lässt sich berechnen. Damit ist es möglich, auch hier die die Flanke einhüllende Modifikationsfläche zu berechnen. Über eine Auswertung des Verlaufes der Schnittlinien zwischen der einhüllenden Fläche und den Stirnschnitten in den Ebenen I bzw. I findet man $f_{H\alpha I}$ bzw. $f_{H\alpha II}$ und damit die Schränkung der Flanke.

Für diese Berechnung muss die Zuordnung der Positionen Y des Werkzeuges zur Position Z der jeweils interessierenden Erzeugungsberührspur bekannt sein. Als Z-Position einer Erzeugungsberührspur gilt die Z-Position des Kreuzungspunktes der Achsen B und C (siehe Fig. 1). Dieser liegt, da die Flankenlinie auf den Teilzylinder bezogen ist, beim Wälzweg L zum Teilzylinder. Für diese Zuordnung der Achsen Y und Z eignet sich das Diagonalverhältnis D. Es gilt:

$$D = \Delta Y / \Delta Z = (Y_e - Y_a) / (Z_e - Z_a).$$

| | |
|---|---|
| $\Delta Y$ | Verschiebung des Werkzeuges in Richtung seiner Drehachse |
| $\Delta Z$ | Verschiebung des Werkzeuges in Richtung der Werkstückdrehachse |
| $Y_e$ | Endposition des Werkzeuges auf der Y-Achse |
| $Y_a$ | Anfangsposition des Werkzeuges auf der Y-Achse |
| $Z_e$ | Endposition des Werkzeuges auf der Z-Achse |
| $Z_a$ | Anfangsposition des Werkzeuges auf der Z-Achse |

Fig.3 zeigt das Messfeld der Rechtsflanke einer rechtschrägen Verzahnung mit den Eckpunkten 8, 9, 13, 12. Punkt 6 liegt beim Wälzweg L zum Teilzylinder in Zahnbreitenmitte. Zur Grundsynchronisation der Achsen Y des Werkzeuges 0 und Z des Werkstückes 2 wird auch die Mitte des Arbeitsbereiches des Werkzeuges auf 6 gelegt so dass in diesem Punkt Y = 0 und Z = 0 sind. Unter Berücksichtigung des Diagonalverhältnisses D erhält man damit eine eindeutige Zuordnung der Positionen von Werkzeug 0 und Werkstück 2.

Zur Ausbildung des Punktes 8 und zur Berechnung der Modifikation $f_8$ in Punkt 8 des Werkstückes muss das Werkzeug um die Strecke 6 10, also um $L_\beta / 2 + gfst * tan (\beta_b)$ in Richtung Z verfahren werden. Durch den Punkt 10

verläuft die unter $\beta_b$ zum Stirnschnitt geneigte Erzeugungsberührspur durch den Punkt 8. Durch den Punkt 10 verläuft auch die Gerade Y'; sie ist unter $\alpha$ zur Erzeugungsberührspur geneigt. Diese Linie ist eine Parallele zur Werkzeugachse durch die durch 10 verlaufende Mantellinie des Werkzeug-Mittenzylinders. Allerdings liegt Y' nicht in der Zeichenebene; vielmehr ist das Achsschnittprofil des Werkzeuges um die durch die Punkte 8 und 10 verlaufende Erzeugungsberührspur in die Zeichenebene gekippt. Das Achsschnittprofil enthält in der skizzierten Stellung die Linie 8 8'. Die Modifikation des Werkzeugprofils im Punkt 8' ist in guter Näherung die Modifikation $f_8$ im Punkt 8 des Werkstückes.

Verschiebt man die Werkzeugachse von 6 nach 10, so verschiebt sich der Nullpunkt der Schnecke für D > 0 in Fig.3 nach links. Der Punkt 10 des Werkzeuges nimmt dann die Position Y = - D * ($L_\beta$ / 2 + gfst * tan ($\beta_b$ )) ein. Damit liegt Y = 0 bei Punkt 17. Die Modifikation $f_8$ in Punkt 8 des Werkstückes 2 findet man auf der Parabel der Werkzeugmodifikation an der Stelle 8'.

Nach dem hier erläuterten Verfahren lassen sich auch die Modifikationen in den Punkten 9, 12 und 13, also $f_9$, $f_{12}$ und $f_{13}$ bestimmen. So entspricht die Modifikation an der Stelle 9 des Werkstückes der Modifikation des Werkzeuges an der Stelle 9'. Dabei liegt Y = 0 an der Stelle 18. Entsprechend liegt Y = 0 für die Berechnung der Modifikationen an den Stellen 12 und 13 bei 19 bzw. 20.

Die Schränkung des Werkstückes, erzeugt im Diagonalverfahren mit balligem Werkzeug, unterscheidet sich von der Schränkung des Werkstückes, erzeugt im Axialverfahren mit zylindrischem Werkzeug. So liegen die Punkte 8 und 10, 9 und 11, 12 und 14 sowie 13 und 15 beim Arbeiten im Axialverfahren mit zylindrischem Werkzeug jeweils auf gleicher Höhe über oder unter dem Messfeld, beim Arbeiten im Diagonalverfahren mit (hohl)-balligem Werkzeug nicht. Hier sind, wie vorstehend erläutert, die Größen

$f_8$, $f_9$, $f_{12}$, $f_{13}$ und daraus die Schränkung

$$S = (f_9 - f_8) - (f_{13} - f_{12})$$

zu berechnen. Ersetzt man $f_8$, $f_9$, $f_{12}$, $f_{13}$ durch die geometrischen Größen nach Fig.3, so erhält man die Schränkung

$$S_y = k_1 \, {}^* c_{\beta y} + k_2 \, {}^* c_{\beta y}.$$

Die Konstante $k_1$ ist von der Berechnung der natürlichen Schränkung, die beim Einsatz eines zylindrischen Werkzeuges entsteht, bekannt. Die Konstante $k_2$ ergibt sich als Zusammenfassung aller in der vorstehend erläuterten Rechnung auftretenden konstanten Größen, wenn die über $k_1 \, {}^* c_{\beta y}$ erfassten Anteile der Schränkung unberücksichtigt bleiben.

Sy besteht aus zwei Anteilen. Diese seien $S_{nat2}$ und $S_k$. Es gilt:

$$S_{nat2} = k_1 \, {}^* c_{\beta y}$$

und

$$S_k = k_2 / D \, {}^* c_{\beta y}.$$

Das Vorzeichen von $S_{nat2}$ liegt über das Vorzeichen von $c_{\beta y}$ fest ( bei balligem Werkstück ist $c_{\beta y} > 0$, bei hohlballigem Werkstück ist $c_{\beta y} < 0$ ). Das Vorzeichen von $S_k$ lässt sich bei gegebenem $c_{\beta y}$ über das Vorzeichen von D festlegen. Damit steht ein Anteil der Schränkung zur Verfügung, über den man eine natürliche Schränkung je nach Aufgabenstellung vergrößern oder verkleinern kann.

Setzt man nun das hohlballige Werkzeug beim Bearbeiten im Diagonalverfahren ein und ändert während der Axialschlittenverschiebung den Achsabstand wie zur Erzeugung einer Breitenballigkeit $c_{\beta x}$ mit einem zylindrischen Werkzeug, so erhält man:

$$c_\beta = c_{\beta x} + c_{\beta y}$$

$$S_{nat} = S_{nat1} + S_{nat2}$$

$$S_k = k_2 \, / \, D \, {}^* \, c_{\beta y}$$

$$S = S_{nat} + S_k.$$

Um an einem Werkstück eine Soll-Breitenballigkeit $c_{\beta s}$ und eine Soll-Schränkung $S_s$ zu erzeugen, wird folgende Abstimmung vorgeschlagen:

$$S_{nat} = k_1 \, {}^* \, c_{\beta s}$$

$$S_{ks} = S_s - S_{nat}$$

$$c_{\beta y} = S_{ks} \, {}^* \, D \, / \, k_2$$

$$c_{\beta x} = c_{\beta s} - c_{\beta y}$$

$$S_{res} = k_1 \, {}^* \, c_{\beta s} + k_2 \, {}^* \, c_{\beta y}.$$

$S_{res}$ ist die resultierende Schränkung.

Mitunter werden an Zylinderrädern Flankenmodifikationen gefordert, die nicht über eine quadratische Parabel beschreibbar sind, bei denen die Modifikation z.B. in der Nähe einer oder beider Stirnflächen des Rades stärker ins Minus weist, als dies bei einer quadratischen Parabel der Fall wäre. Derartige Räder lassen sich nach dem hier beschriebenen Verfahren wie folgt bearbeiten: Man zerlegt die geforderte Modifikation mit bekannten Mitteln in einen Anteil 1, der die geforderte Modifikation über eine Modifikation mit quadratischem Verlauf optimal annähert, und einen Anteil 2, der den Rest der geforderten Modifikation beinhaltet. Man bearbeitet das Werkstück nach einem der Ansprüche 5 bis 12 so, als läge nur der Anteil 1 vor, überlagert aber den Achsbewegungen der Maschine die Zusatzbewegungen, die zur Bearbeitung des Anteils 2 erforderlich sind. Dazu eignet sich z.B. eine Änderung des Achsabstandes und / oder eine Tischzusatzdrehung während der Axialschlittenverschiebung.

Die bisherigen Aussagen beziehen sich auf Rechtsflanken rechtsschräger Räder. Für die Linksflanken rechtsschräger Räder gilt: Erfolgt die Bearbeitung im Zweiflankenprozess nach Anspruch 5, so entsteht die gleiche Breitenballigkeit wie auf der Rechtsflanke. Die natürliche Schränkung besitzt den gleichen Betrag wie die auf der Rechtsflanke, aber entgegengesetztes Vorzeichen. Beim Bearbeiten linksschräger Räder im Zweiflankenprozess nach Anspruch 5 entsteht die gleiche Breitenballigkeit wie bei rechtsschrägen Rädern; die natürliche Schränkung besitzt den gleichen Betrag wie die Schränkung rechtsschräger Räder, aber entgegengesetztes Vorzeichen. Demnach gilt: Beim Bearbeiten im Zweiflankenprozess nach Anspruch 5 entsteht die gleiche Breitenballigkeit, sofern die Bearbeitungs-maschine gleich programmiert ist. Die natürliche Schränkung ist auf den Rechtsflanken rechtsschräger Räder und auf den Linksflanken linksschräger Räder positiv für $c_{\beta y} > 0$ und gleichzeitig $D > 0$; sie ist negativ auf den übrigen Flanken.

Auch mit einem von außen konvexen Werkzeug lassen sich die vorstehend erläuterten Effekte erzielen. Man erhält jedoch gegenüber dem Einsatz eines hohlballigen Werkzeuges $c_{\beta y} < 0$ und eine natürliche Schränkung mit entgegengesetztem Vorzeichen. Man muss deshalb das Vorzeichen von $D$ gegenüber den Verhältnissen beim Einsatz eines hohlballigen Werkzeuges umkehren, um den Betrag einer resultierenden Schränkung gegenüber der natürlichen Schränkung zu verringern.

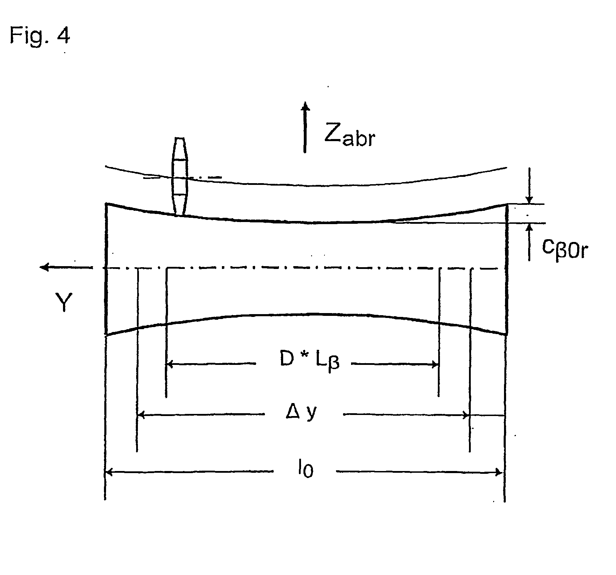

Ein besonders einfaches Verfahren zur Erzeugung der erforderlichen Werkzeugballigkeit eignet sich für abrichtbare Werkzeuge (Fig. 4). Man arbeitet mit einer diamantbelegten "Doppelkegelscheibe". Der Profiliervorgang unterscheidet sich vom Profilieren einer zylindrischen Schnecke nur dadurch, dass während der Verschiebung der Schnecke in Richtung ihrer Achse der Abstand $Z_{\alpha br}$ zwischen Profilierscheibe und Schnecke geändert wird. In Schneckenmitte wird ein bestimmter Achsabstand verwirklicht und zu den beiden Schneckenenden hin entsprechend dem Quadrat des Abstandes von der Schneckenmitte vergrößert (positive Balligkeit des Werkzeuges) oder verkleinert (negative Balligkeit des Werkzeuges). Bei der Übertragung der Schneckenmodifikation, betrachtet im Axialschnitt des Werkzeuges, ist zu beachten, dass die Achsabstandsänderung beim Profilieren mit sin ( $\alpha_n$ ) zu multiplizieren ist, um die Balligkeit im Achsschnitt und damit näherungsweise in der Normalschnittebene zu erhalten. Die Übertragung von Strecken von der Werkzeugachse auf die Werkstückachse erfolgt über das Diagonalverhältnis. In Fig. 4 ist die Verzahnung des Werkzeuges nicht dargestellt, sondern nur der Verlauf der Modifikation, stark vergrößert, die beim Profilieren des Werkzeuges im Achsschnitt erzeugt wird. Der Betrag der Hohlballigkeit des Werkzeuges im Achsschnitt ist $c_{\beta 0r}$. Wird das Werkzeug über eine Länge $l_0$ profiliert, und soll am Werkstück eine Balligkeit $c_{\beta y}$ entstehen, so muss $c_{\beta 0r}$ der folgenden Gleichung genügen:

$$c_{\beta 0r} = c_{\beta y} / \sin ( \alpha_n ) * ( l_0 / ( D * L_\beta ))^2 .$$

Das Werkzeug muss nicht über (nahezu) die gesamte Länge $l_0$ modifiziert werden. Es ist auch möglich, nur einen geringen Teil der Länge, z.B. in der Nähe eines Werkzeugendes, zu modifizieren. Damit steht ein größerer Teil der Werkzeuglänge in zylindrischer Ausführung zur Verfügung. Damit ist es möglich, mit dem zylindrischen Teil konventionell zu schruppen und mit dem modifizierten Teil die gewünschten Modifikationen am Werkstück zu erzeugen.

Das vorgeschlagene Verfahren ist ein Näherungsverfahren zur Lösung der gestellten Aufgabe. In bestimmten Fällen können bei Anwendung des Verfahrens noch unerwünschte Abweichungen verbleiben; dies gilt insbesondere für Fälle, in denen mit einem kurzen Werkzeug gearbeitet wird. Diese Abweichungen können darin bestehen, dass die Vorgaben bezüglich Schränkung und / oder Breitenballigkeit nicht genau genug erfüllt sind. Es ist auch möglich, dass unerwünschte Profilwinkelabweichungen, aber auch geringe Höhenballigkeiten auftreten. Für derartige Fälle wird vorgeschlagen, eine neue Berechnung der Einstelldaten über korrigierte "Sollvorgaben" vorzunehmen und ggf. zusätzlich beim Abrichten eine Korrektur des Schneckenprofils vorzunehmen.

Nach obigem stellt die Erfindung bereit ein Verfahren zur Bearbeitung der Flanken im Wesentlichen zylindrischer, aber breitenballig modifizierter Verzahnungen im Diagonal-Wälzverfahren unter Verwendung eines schneckenförmigen Werkzeuges, das in Richtung seiner Drehachse ballig modifiziert ist, wobei die Balligkeit positiv oder negativ (hohlballig) sein kann, wobei eine der Verwindung der Flanken aufgrund der erzeugten Ballligkeit entsprechende Schränkung erzeugt wird, wobei sich die Balligkeit der Werkstückflanken aus einer Überlagerung eines Anteils, der aus der Balligkeit des Werkzeuges beim Arbeiten im Diagonalverfahren mit einem dabei vorgesehenen Diagonalverhältnis hervorgeht, und eines weiteren Anteils ergibt, der während der Bearbeitung durch eine Änderung des Abstands zwischen Werkzeug und Werkstück erzeugt wird und einer natürlichen Schränkung entspricht, und bei dem man zum Erreichen einer geforderten Schränkung eine gesteuerte Überlagerung der beiden Anteile durch eine Abstimmung der Balligkeit des Werkzeugs mit dem Diagonalverhältnis vornimmt.

**Patentansprüche**

1. Verfahren zur Bearbeitung der Flanken im wesentlichen zylindrischer, aber breitenballig modifizierter Verzahnungen im Diagonal-Wälzverfahren unter Verwendung eines schneckenförmigen Werkzeuges, das in Richtung seiner Drehachse durch eine Änderung der Steigungshöhe seiner Flanken ballig modifiziert ist, wobei die Balligkeit positiv oder negativ (hohlballig) sein kann,
   bei dem die Balligkeit des Werkstücks durch eine Überlagerung eines Anteils, der im Diagonalverfähren aus der Balligkeit des Werkzeugs resultiert, und eines weiteren Anteils, der über eine Änderung des Achsabstandes zwischen Werkzeug und Werkstück während der Axialschlittenverschiebung erzeugt wird, entsteht
   und bei dem eine dabei entstehende Schränkung durch eine Überlagerung eines natürlichen Anteils, der unabhängig davon ist, wie die Balligkeit erzeugt wurde, und eines vom Betrag und Verlauf der Balligkeit des Werkzeugs in Richtung seiner Drehachse sowie dem Diagonalverhältnis abhängigen weiteren Anteils entsteht,
   wobei zur Erzeugung einer geforderten Balligkeit und einer geforderten Schränkung der natürliche Anteil der Schränkung aus der geforderten Balligkeit berechnet wird, der weitere Anteil der Schränkung durch eine Abstimmung der Balligkeit des Werkzeuges und des Diagonalverhältnisses, derart eingestellt wird, daß resultierend die geforderte Schränkung entsteht, und der weitere Anteil der Balligkeit über die Änderung des Achsabstands derart eingestellt wird, daß resultierend die geforderte Balligkeit entsteht, **dadurch gekennzeichnet, daß** eine neue Berechnung der Einstelldaten über korrigierte Sollvorgaben für Schränkung und Balligkeit vorgenommen wird, wenn Abweichungen bezüglich der Erfüllung der geforderten Schränkung und/oder Breitenballigkeit verbleiben.

2. Verfahren nach Anspruch 1 , bei dem die Balligkeit des Werkzeuges dadurch gebildet ist, daß sich bei dem Werkzeug die Steigungshöhe der Flanken von einem Ende der Schnecke ausgehend zum anderen Ende hin ändert.

3. Verfahren nach Anspruch 2, bei dem die Steigungshöhenänderung proportional zum Abstand vom Schneckenende ist.

4. Verfahren nach Anspruch 2 oder 3, bei dem die maximale Steigungshöhe der einen Flanke an einem Ende der Schnecke mit der minimalen Steigungshöhe der anderen Flanke an diesem Schneckenende zusammenfällt und umgekehrt.

5. Verfahren nach einem der Ansprüche 1 bis 4, bei dem das für die Bearbeitung vorgesehene Diagonalverhältnis

$$D = ( Y_e - Y_a ) / ( Z_e - Z_a )$$

festgelegt, die natürliche Schränkung

$$S_{nat} = k_1 * c_\beta,$$

der kompensierende Anteil der Schränkung

$$S_{ks} = S_s - S_{nat},$$

der aus der Werkzeugballigkeit resultierende Anteil der Werkstückballigkeit

$$c_{\beta y} = S_{ks} * D / k_2,$$

der über eine Achsabstandsänderung während der Bearbeitung zu erzeugende Anteil der Werkstückballigkeit

$$c_{\beta x} = c_\beta - c_\beta$$

berechnet werden, wobei die Konstanten $k_1$ bzw. $k_2$ jeweils eine Kombination der bei einer Berechnung des Zusammenhanges zwischen $c_{\beta x}$ und $S_x$ bzw. $c_{\beta y}$ und Sy aus den Modifikationsbeträgen an den vier Eckpunkten des Messfeldes benötigten Konstanten sind und die aus der Achsabstandsänderung während der Bearbeitung entstehende Schränkung

$$S_x = k_1 * c_{\beta x},$$

und die aus der Werkzeugballigkeit beim Arbeiten im Diagonalverfahren entstehende Schränkung

$$S_y = ( k_1 + k_2 / D ) * c_{\beta y},$$

sowie die Gesamtschränkung

$$S_{res} = S_x + S_y$$

berechnet werden und wobei zur Erzeugung von $c_{\beta y}$ ein Werkzeug mit einer radialen Balligkeit (Balligkeit im Werkzeugaxialschnitt) mit einem Verlauf entsprechend der Gleichung

$$Z_{abr} = +(-)4 * C_{\beta y} / (\sin (\alpha_n) * (D * L_\beta)^2) * y^2$$

eingesetzt wird, wobei das negative Vorzeichen für ein hohlballiges Werkzeug gilt und für den Fall, dass die bei Anwendung des Verfahrens erzielten Istwerte von Balligkeit $c_{\beta i}$ und / oder Schränkung $S_i$ noch zu große Unterschiede

$$\Delta c_{\beta s} = c_{\beta i} - c_{\beta s}$$

und / oder

$$\Delta S_s = S_i - S_s$$

zu den Vorgaben aufweisen, das Verfahren mit korrigierten Werten für $c_{\beta s}$ und / oder $S_s$ erneut angewendet wird, wobei anstelle von $c_{\beta s}$ bzw.

$$S_s$$

$$c_{\beta s} + \Delta c_{\beta s} \text{ bzw.}$$

$$S_s + \Delta S_s$$

gesetzt wird, und wobei eventuell zusätzlich auftretende Unzulänglichkeiten bezüglich Profilwinkelabweichung und / oder Höhenballigkeit über Maßnahmen entsprechend dem Stand der Technik beseitigt werden.

6. Verfahren nach Anspruch 1 bis 5, bei dem mit einem vorhandenen Werkzeug, das über eine ausreichend große Länge profiliert ist, mit dem eine andere Balligkeit und/oder Schränkung erzeugt werden soll, als bei der Auslegung von Werkzeug und Prozess berücksichtigt wurde, **dadurch gekennzeichnet, dass** durch Anpassen des Diagonalverhältnisses und Anpassen des Achsabstandes während der Bearbeitung die gewünschten Werte von Breitenballigkeit und Schränkung erzeugt werden.

7. Verfahren nach Anspruch 1 bis 6,
**dadurch gekennzeichnet, dass** im Falle einer Einflankenbearbeitung die Änderung des Achsabstandes während der Bearbeitung ersetzt werden kann durch eine Änderung der Werkstückzusatzdrehung während der Bearbeitung oder durch eine Kombination von Achsabstandsänderung und Zusatzdrehung während der Bearbeitung.

8. Verfahren nach einem der Ansprüche 1 bis 7,
**dadurch gekennzeichnet, dass** im Falle einer Einflankenbearbeitung ein Werkzeug eingesetzt wird, bei dem die Balligkeit nicht erzeugt ist über eine Änderung des Achsabstandes zwischen Abrichtrolle und Werkzeug während der Verschiebung des Tangentialschlittens, sondern von einer Werkzeugzusatzdrehung während der Tangentialschlittenverschiebung und / oder von einer Zusatzverschiebung des Werkzeuges in Richtung seiner Drehachse während der Tangentialschlittenverschiebung.

9. Verfahren nach einem der Ansprüche 1 bis 6 zur Bearbeitung von Werkstücken, bei denen für die Linksflanken und für die Rechtsflanken unterschiedliche Werte für Breitenballigkeit und / oder Schränkung vorgeschrieben sind,
**dadurch gekennzeichnet, dass** für das Profilieren des Werkzeuges und zur Ermittlung der jeweiligen Maschineneinstelldaten jeweils eine separate Auslegung durchgeführt und das Werkstück in Einflankenbearbeitung erzeugt wird.

10. Verfahren nach einem der Ansprüche 1 bis 9 zur Bearbeitung von Werkstücken, bei denen für die Linksflanken und für die Rechtsflanken unterschiedliche Werte für Breitenballigkeit und / oder Schränkung vorgeschrieben sind,
**dadurch gekennzeichnet, dass** das Verfahren ein Zweiflankenprozess ist und dass für die Linksflanken und die Rechtsflanken jeweils eine separate Auslegung vorgenommen wird, wobei jedoch das Diagonalverhältnis (D) für beide Auslegungen gleich gewählt wird und $c_{\beta x}$ aus der Überlagerung einer Änderung des Achsabstandes zwischen Werkzeug und Werkstück während der Axialschlittenbewegung und einer gleichzeitig ausgeführten Änderung der Werkstückzusatzdrehung während der Axialschlittenbewegung besteht, und
$c_{\beta y}$ im Diagonalverfahren von einem Werkzeug gebildet wird, bei dem die Werkzeugballigkeit aus der Überlagerung zweier Anteile besteht, von denen einer erzeugt wird über eine Änderung des Achsabstandes zwischen Abrichtrolle und Werkzeug und der zweite entweder über eine Werkzeugzusatzdrehung oder über eine Zusatzverschiebung des Werkzeuges jeweils beim Profilieren während der Verschiebung des Tangentialschlittens.

11. Verfahren nach einem der Ansprüche 1 bis 10,
**dadurch gekennzeichnet, dass** zur Bearbeitung von Werkstücken, deren Flankenmodifikation nicht über eine quadratische Parabel beschreibbar ist, die geforderte Modifikation mit bekannten Mitteln zerlegt wird in einen Anteil 1, der die geforderte Modifikation über eine Modifikation mit einem Verlauf entsprechend einer quadratischen Parabel optimal anpasst, und einen verbleibenden Anteil 2, und die Bearbeitung des Anteils 1 nach einem der Ansprüche 1 bis 11 erfolgt, wobei die zur Erzeugung des Anteiles 2 erforderlichen Achsbewegungen den zur Bearbeitung des Anteils 1 erforderlichen überlagert werden.

12. Verfahren nach einem der Ansprüche 1 bis 11,
**dadurch gekennzeichnet, dass** das jeweils eingesetzte Werkzeug ein abrichtbares oder ein nicht abrichtbares Schleifwerkzeug ist.

13. Verfahren nach einem der Ansprüche 1 bis 12,
**dadurch gekennzeichnet, dass** das jeweils eingesetzte Werkzeug ein Wälzfräser ist, wobei die zur Bewegung bzw. Profilierung des Werkzeuges erforderlichen Merkmale sich auf den Werkzeug-Hüllkörper beziehen und die zum Bearbeiten der Werkzeug-Freiflächen erforderlichen Bewegungen zusätzlich ausgeführt werden.

## Claims

1. A method for machining the flanks of substantially cylindrical cogged pieces modified with crowning by the diagonal rolling method using a worm-shaped tool which is modified with crowning in the direction of its rotary axis by changing the pitch of its flanks, the crowning being able to be positive or negative (concave crowning),
wherein the crowning of the workpiece is produced by superimposing one portion, which results from the crowning of the tool in the diagonal method, and a further portion, which is produced by changing the axial distance between the tool and the workpiece during the axial carriage movement,
and wherein a twist produced here is produced by superimposition of a natural portion that is independent of how the crowning has been produced, and of a further portion dependent upon the amount and profile of the crowning of the tool in the direction of its axis of rotation and upon the diagonal ratio,
in order to produce a required crowning and a required twist the natural portion of the twist being calculated from the required crowning, the further portion of the twist due to matching the crowning of the tool and the diagonal ratio being set such that as a result the required twist is produced, and the further portion of the crowning being adjusted by changing the axial distance such that as a result the required crowning is produced, **characterised in that** a new calculation of the setting data is made by means of corrected target specifications for twist and/or crowning if there are still deviations with regard to fulfilment of the required twist and crowning.

2. The method according to Claim 1, wherein the crowning of the tool is formed by the tool changing the pitch of the flanks from one end of the worm to the other end.

3. The method according to Claim 2, wherein the change of the pitch is proportionate to the distance from the end of the worm.

4. The method according to Claim 2 or 3, wherein the maximum pitch of one flank at one end of the worm coincides with the minimum pitch of the other flank at this end of the worm and vice versa.

5. The method according to any of Claims 1 to 4, wherein the diagonal ratio provided for the machining

$$D = (Y_e - Y_a) / (Z_e - Z_a)$$

is specified, and the natural twist

$$S_{nat} = k_1 * c_\beta,$$

the compensating portion of the twist

$$S_{ks} = S_s - S_{nat},$$

the portion of the workpiece crowning which results from the crowning of the tool

$$c_{\beta y} = S_{ks} * D / k_2,$$

and the portion of the workpiece crowning which is to be generated by changing the axial distance during machining

$$c_{\beta x} = c_\beta - c_{\beta y}$$

are calculated, the constants $k_1$ and $k_2$ respectively being a combination of the constants which are required when calculating the relationship between $c_{\beta x}$ and $S_x$ and between $c_{\beta y}$ and $S_y$ from the amounts of modification at the four corner points of the measurement field, and the twist that results from the change in the axial distance during machining

$$S_x = k_1 * c_{\beta x},$$

and the twist that results from the crowning of the tool when working by the diagonal method

$$S_y = (k_1 + k_2 / D) * c_{\beta y},$$

and the total twist

$$S_{res} = S_x + S_y$$

being calculated, and $c_{\beta y}$ being generated by using a tool having radial crowning (crowning in the axial section of the tool) with a profile corresponding to the equation

$$Z_{abr} = +(-)4 * C_{\beta y} / (\sin (\alpha_n) * (D * L_\beta) \wedge 2) * y \wedge 2$$

the negative sign applying to a concave-crowned tool and, in the case where the differences

$$\Delta_{c\beta s} = c_{\beta i} - c_{\beta s}$$

and / or

$$\Delta S_s = S_i - S_s$$

by which the actual amounts of crowning $c_{\beta i}$ and/or twist $S_i$ obtained by using the method deviate from the specified target values are still too large, the process being repeated with corrected values for $c_{\beta s}$ and/or $S_s$, $c_{\beta s}$ or $S_s$ being replaced by

$$c_{\beta s} + \Delta c_{\beta s}$$

or

$$S_s + \Delta S_s,$$

and any additional deficiencies occurring with regard to profile angle deviation and/or height crowning being eliminated in accordance with the prior art.

6. The method according to Claims 1 to 5 wherein an existing tool which is profiled over a sufficient length is used to generate a different crowning and/or twist than was taken into account when designing the tool and process, **characterised in that** the desired amounts of crowning and twist are generated by adjusting the diagonal ratio and by adjusting the axial distance during machining.

7. The method according to Claims 1 to 6,
**characterised in that** in the case of single-flank machining the change to the axial distance during machining can be replaced by changing the additional rotation of the workpiece during machining or by a combination of changing the axis distance and additional rotation during machining.

8. The method according to any of Claims 1 to 7,
**characterised in that** in the case of single-flank machining, a tool is used in which the crowning is not generated by changing the axial distance between the dressing roller and the tool during the movement of the tangential carriage, but by an additional rotation of the tool during the movement of the tangential carriage and/or by an additional movement of the tool in the direction of its rotary axis during the movement of the tangential carriage.

9. The method according to any of Claims 1 to 6 for the machining of workpieces in which different amounts of crowning and/or twist are specified for the left flanks and for the right flanks,
**characterised in that** separate layouts are implemented for the profiling of the tool and determination of the respective machine setting data and the workpiece is generated by single-flank machining.

10. The method according to any of Claims 1 to 9 for the machining of workpieces in which different amounts of crowning and/or twist are specified for the left flanks and for the right flanks,
**characterised in that** the method is a dual-flank process and that separate layouts are implemented for the left flanks and the right flanks, the same diagonal ratio (D) being selected for both layouts however, and $c_{\beta x}$ consisting of the superimposition of a change to the axial distance between the tool and the workpiece during the movement of the axial carriage and a simultaneously executed change to the additional rotation of the workpiece during the movement of the axial carriage, and
$c_{\beta y}$ being formed by the diagonal method by a tool in which the tool crowning consists of the superimposition of two portions, one of which is generated by changing the axial distance between the dressing roller and the tool and the second is generated either by an additional rotation of the tool or by an additional movement of the tool by profiling during the movement of the tangential carriage.

11. The method according to any of Claims 1 to 10,
**characterised in that**, for the machining of workpieces, the flank modification of which can not be described by a quadratic parabola, the required modification is sub-divided by conventional means into a portion 1, which optimally adjusts the required modification by a modification with a profile corresponding to a quadratic parabola, and a remaining portion 2, and the machining of portion 1 takes place according to any of Claims 1 to 11, the axial movements required to generate portion 2 being superimposed on those that are required to process portion 1.

12. The method according to any of Claims 1 to 11,
**characterised in that** the respectively used tool is a grinding tool which is capable or not capable of being dressed.

13. The method according to any of Claims 1 to 12,
**characterised in that** the respectively used tool is a hob, the features required for the movement and profiling of the tool relating to the enveloping body of the tool, and the movements that are required for the machining of the free surfaces of the tool being carried out additionally.

## Revendications

1. Procédé d'usinage des flancs de dentures sensiblement cylindriques mais dont le bombement est modifié dans la largeur, lors d'un procédé de taillage diagonal par génération faisant appel à un outil hélicoïdal dont le bombement est modifié dans le sens de l'axe de rotation du fait d'une modification du pas hélicoïdal de ses flancs, le bombement pouvant être convexe ou concave,
dans lequel le bombement de la pièce à usiner est produit par la superposition d'une composante produite à partir du bombement de l'outil lors du procédé de taillage diagonal, et d'une autre composante produite par la modification de l'entraxe entre l'outil et la pièce à usiner au cours du déplacement du chariot axial,
et dans lequel une inclinaison ainsi produite résulte d'une superposition d'une composante naturelle qui est indépendante de la manière avec laquelle le bombement a été produit, et d'une autre composante qui dépend de la quantité et du tracé du bombement de l'outil dans le sens de son axe de rotation ainsi que du rapport diagonal,
dans lequel, pour produire un bombement requis et une inclinaison requise, la composante naturelle de l'inclinaison est calculée à partir du bombement requis, l'autre composante de l'inclinaison est établie par un réglage du bombement de l'outil et du rapport diagonal de manière à donner lieu à l'inclinaison requise, et l'autre composante du bombement est établie grâce à la modification de l'entraxe de manière à donner lieu au bombement requis, **caractérisé en ce qu'**il est entrepris un nouveau calcul des données de réglage au moyen de données de consigne préalables corrigées pour l'inclinaison et le bombement lorsqu'il demeure des divergences concernant la réalisation de l'inclinaison et/ou du bombement longitudinal requis.

2. Procédé selon la revendication 1, dans lequel le bombement de l'outil est formé grâce au fait que, chez l'outil, le pas hélicoïdal des flancs varie entre une extrémité de la vis sans fin et l'autre.

3. Procédé selon la revendication 2, dans lequel la modification du pas hélicoïdal est proportionnelle à l'écart par rapport à l'extrémité de la vis sans fin.

4. Procédé selon la revendication 2 ou 3, dans lequel le pas hélicoïdal maximal d'un flanc à une extrémité de la vis sans fin coïncide avec le pas hélicoïdal minimale de l'autre flanc à cette extrémité de la vis sans fin, et vice-versa.

5. Procédé selon l'une des revendications 1 à 4, dans lequel le rapport diagonal

$$D = ( Y_e - Y_a )/( Z_e - Z_a )$$

prévu pour l'usinage est établi, l'inclinaison naturelle

$$S_{nat} = k_1 * c_\beta$$

de la composante de compensation de l'inclinaison

$$S_{ks} = S_s - S_{nat},$$

la composante du bombement de la pièce à usiner

$$c_{\beta y} = S_{ks} * D/k_2$$

résultant du bombement de l'outil,
la composante du bombement de la pièce à usiner

$$c_{\beta x} = c_\beta * c_{\beta y}$$

à produire grâce à une modification de l'entraxe lors de l'usinage sont calculées, les constantes $k_1$ et $k_2$ étant respectivement une combinaison des constantes nécessaires lors d'un calcul du rapport entre $c_{\beta x}$ et $S_x$ et du rapport

entre $c_{\beta y}$ et $S_y$ à partir des quantité de modification aux quatre points angulaires du champ de mesure, et l'inclinaison

$$S_x = k_1 * c_{\beta x}$$

créée par la modification de l'entraxe pendant l'usinage, et l'inclinaison

$$S_y = ( k_1 + k_2/D ) * c_{\beta y}$$

créée par le bombement de l'outil lors du procédé de taillage diagonal, ainsi que l'inclinaison totale

$$S_{res} = S_x + S_y$$

sont calculées et, pour produire $c_{\beta y}$, on emploie un outil présentant un bombement radial (bombement dans la coupe axiale de l'outil) dont le tracé correspond à l'équation

$$Z_{abr} = +(-)4 * c_{\beta y}/(\sin (\alpha_n) * (D * L_\beta) \wedge 2) * y \wedge 2,$$

dans laquelle le signe négatif est applicable à un
outil concave et, au cas où les valeurs réelles, obtenues
lors de l'utilisation du procédé, relatives au bombement $c_{\beta i}$ et/ou à l'inclinaison $S_i$, présentent encore de trop grandes différences

$$\Delta c_{\beta s} = c_{\beta i} - c_{\beta s}$$

et/ou

$$\Delta S_s = S_i - S_s$$

par rapport aux données préalables, on met en oeuvre à nouveau le procédé avec des valeurs corrigées pour $c_{\beta s}$ et/ou $S_s$, dans lequel on pose

$$c_{\beta s} + \Delta c_{\beta s}$$

et

$$S_s + \Delta S_s,$$

respectivement, au lieu de $c_{\beta s}$, et $S_s$, les autres insuffisances éventuellement résultantes relativement aux écarts d'angle de profil et/ou de bombement dans la hauteur étant palliées grâce à des mesures connues dans l'état de la technique.

6.  Procédé selon la revendication 1 à 5, comportant un outil qui est profilé sur une longueur suffisante et servant à produire un autre bombement et/ou une autre inclinaison que ceux considérés lors de la conception de l'outil et du processus, **caractérisé en ce que** le réglage du rapport diagonal et le réglage de l'entraxe lors de l'usinage permettent d'obtenir les valeurs souhaitées en termes de bombement longitudinal et d'inclinaison.

7.  Procédé selon la revendication 1 à 6, **caractérisé en ce que**, dans le cas d'un usinage sur un flanc, la modification de l'entraxe lors de l'usinage peut être remplacée par une modification de la rotation supplémentaire de la pièce à usiner au cours de l'usinage ou par une combinaison de modification d'entraxe et de rotation supplémentaire au cours de l'usinage.

8. Procédé selon l'une des revendications 1 à 7, **caractérisé en ce que**, dans le cas d'un usinage sur un flanc, on peut employer un outil avec lequel le bombement n'est pas produit du fait d'une modification de l'entraxe entre un cylindre de dressage et l'outil lors du déplacement du chariot tangentiel, mais plutôt par une rotation supplémentaire de l'outil lors du déplacement du chariot tangentiel et/ou par un déplacement supplémentaire de l'outil dans la direction de son axe de rotation au cours du déplacement du chariot tangentiel.

9. Procédé selon l'une des revendications 1 à 6 pour l'usinage de pièces à usiner dans lesquelles des valeurs différentes de bombement longitudinal et/ou d'inclinaison sont prescrites pour les flancs gauches et pour les flancs droits, **caractérisé en ce que**, pour le profilage de l'outil et pour la détermination des données de réglage machine respectives, on réalise respectivement une conception séparée et on produit la pièce à usiner selon un usinage sur un flanc.

10. Procédé selon l'une des revendications 1 à 9 pour l'usinage de pièces à usiner dans lesquelles des valeurs différentes de bombement longitudinal et/ou d'inclinaison sont prescrites pour les flancs gauches et pour les flancs droits, **caractérisé en ce que** le procédé est un processus sur deux flancs et **en ce qu'**on entreprend une conception séparée pour les flancs gauches et les flancs droits, dans lequel cependant le rapport diagonal (D) est choisi pour être similaire pour les deux conceptions et $c_{\beta x}$ consiste en la superposition d'une modification de l'entraxe entre l'outil et la pièce à usiner lors du déplacement du chariot axial et d'une modification simultanément exécutée de la rotation supplémentaire de la pièce à usiner lors du déplacement du chariot axial, et
$c_{\beta y}$ est formé, dans le procédé de taillage diagonal, par un outil dans lequel le bombement de l'outil se compose de la superposition de deux composantes, parmi lesquelles l'une est produite par le biais d'une modification de l'entraxe entre le cylindre de dressage et l'outil et la seconde soit par le biais d'une rotation supplémentaire de l'outil, soit par le biais d'un décalage supplémentaire de l'outil respectivement lors du profilage pendant le décalage du chariot tangentiel.

11. Procédé selon l'une des revendications 1 à 10, **caractérisé en ce que**, pour l'usinage de pièces à usiner dont la modification des flancs ne peut pas être décrite par une parabole quadratique, la modification requise avec des moyens connus est décomposée en une composante 1, qui ajuste de manière optimale la modification requise par le biais d'une modification à tracé selon une parabole quadratique, et une composante 2 restante, et **en ce que** l'usinage de la composante 1 s'effectue selon l'une des revendications 1 à 10, les déplacements de l'axe nécessaires pour la production de la composante 2 étant superposés aux déplacements supplémentaires nécessaires pour le traitement de la composante 1.

12. Procédé selon l'une des revendications 1 à 11, **caractérisé en ce que** l'outil respectivement employé est un outil de rectification dressable ou un outil de rectification non dressable.

13. Procédé selon l'une des revendications 1 à 12, **caractérisé en ce que** l'outil respectivement utilisé est une fraise-mère, et dans lequel les caractéristiques nécessaires au déplacement ou au profilage de l'outil se réfèrent au corps d'enveloppe de l'outil, les déplacements nécessaires pour l'usinage des faces de dépouille de l'outil étant réalisés en sus.

Fig. 1

Fig.2

Fig.3

Fig. 4

**IN DER BESCHREIBUNG AUFGEFÜHRTE DOKUMENTE**

**In der Beschreibung aufgeführte Patentdokumente**

- DE 3704607
- EP 1036624 A2

- EP 1995010 A